# EUROPÄISCHE PATENTSCHRIFT

(11) **EP 3 300 460 B1**
(45) Veröffentlichungstag und Bekanntmachung des Hinweises auf die Patenterteilung: **26.06.2019**
(21) Anmeldenummer: 17189281.3
(22) Anmeldetag: 04.09.2017
(51) Int. Cl.: H02J 9/02, H05B 37/02

(54) **AUTOMATISIERTES ERKENNEN DER ZUORDNUNG VON NOTLEUCHTEN ZU STROMKREISEN**
AUTOMATED DETECTION OF THE ALLOCATION OF EMERGENCY LIGHTS TO CIRCUITS
DÉTECTION AUTOMATIQUE DE L'ATTRIBUTION DE LAMPES DE SECOURS À DES CIRCUITS ÉLECTRIQUES

(30) Priorität: 19.09.2016 DE 102016217903
(43) Veröffentlichungstag der Anmeldung: 28.03.2018
(60) Teilanmeldung: 18199931.9
(73) Patentinhaber: FiSCHER Akkumulatorentechnik GmbH, 41469 Neuss (DE)
(72) Erfinder: Fischer, Axel, 41470 Neuss (DE)
(74) Vertreter: dompatent von Kreisler Selting Werner - Partnerschaft von Patent- und Rechtsanwälten mbB

(56) Entgegenhaltungen:
- EP-A1- 2 573 630
- EP-A2- 1 953 893

## Beschreibung

Die Erfindung betrifft ein Verfahren zum automatisierten Erkennen der Zuordnung von Notleuchten zu Stromkreisen in einem Notlichtsystem.

Als Notlichtsystem wird ein mehrere Leuchten aufweisendes System bezeichnet, dessen Leuchten in Notsituationen auf Gefahren hinweisen (zum Beispiel Brand in einem Gebäude) und/oder Flucht- oder Rettungswege, über die ein Gebäude oder Bereiche sicher verlassen werden können, anzeigen oder beleuchten. Notlichtsysteme werden auch als Notbeleuchtungssysteme bezeichnet. Die Leuchten sind typischerweise modular als Leuchtenmodule ausgebildet, die je nach Verwendungsart in einem von mehreren Betriebszuständen zu betreiben sind. Beispielsweise können die Leuchtenmodule als Rettungszeichenleuchte auf einen Fluchtweg (Notausgang) hinweisen und sind in diesem Fall typischerweise im Dauerbetrieb zu beleuchten. Andere Leuchtenmodule werden als Sicherheitsleuchten im Bereitschaftsbetrieb betrieben und nur in einem Notfall, wie zum Beispiel einem Brand oder Ausfall des allgemeinen Spannungsversorgungsnetzes, beleuchtet, um Flucht- und Rettungswege eindeutig zu kennzeichnen und nutzbar zu machen.

Ein Notbeleuchtungssystem des Anmelders ist beispielsweise unter dem Namen "ECC2" bekannt. Dieses Notbeleuchtungssystem weist eine Vielzahl von Einzelbatterieleuchten in Form von Sicherheits- oder Rettungszeichenleuchten auf, welche jeweils mit einer eigenen Batterie als Ersatzstromquelle versehen sind. Beim Ausfall der Netzversorgungsspannung dient die Ersatzstromquelle zur Notstromversorgung. Bei jeder Einzelbatterieleuchte handelt es sich gemäß der vorliegend verwendeten Terminologie um ein Leuchtenmodul.

Ferner ist als Notbeleuchtungssystem ein als "ZBX" bezeichnetes Zentralbatteriesystem bekannt, welches ebenfalls eine Vielzahl von Sicherheits- und Rettungszeichenleuchten (Leuchtenmodule) aufweist, die jedoch bei einem Ausfall der Netzversorgungsspannung oder einer anderen, im Normalbetrieb zur Versorgung genutzten Spannung aus einer zentralen Batterie als Ersatzstromquelle versorgt werden.

Ein weiteres Notbeleuchtungssystem ist als Zentralbatteriesystem mit Leistungsbegrenzung unter der Bezeichnung "INSiLIA" bekannt. Dieses System weist ebenfalls eine Vielzahl von Leuchtenmodulen als Sicherheits- und Rettungszeichenleuchten auf, die bei einem Ausfall der Netzversorgungsspannung oder einer anderen, im Normalbetrieb zur Versorgung genutzten Spannung aus einer zentralen Batterie als Ersatzstromquelle versorgt werden.

Moderne Notbeleuchtungssysteme, wie die vom Anmelder bekannten Systeme "ECC2 Touch" oder "INSiLIA", verfügen über eine zentrale Steuereinheit mit grafischem Benutzerinterface mit einem Touch Display im "App-Design", welches von modernen Smartphones bekannt ist, oder einem Webinterface mit grafischen Objekten. Über das Interface werden dem Installateur und Betreiber eine einfache Bedienung ermöglicht. Auf den Displays dieser bekannten Benutzerschnittstellen werden die vorhandenen Leuchtenmodule unter Verwendung einfacher Symboliken oder in einfachen Listen dargestellt, um dem Bediener eine einfachere Identifizierung der Leuchten in den entsprechenden Bereichen zu ermöglichen. Die Zuordnung der Leuchten zu den jeweiligen Betriebsmodi erfolgt anhand einer eindeutigen, in den Leuchtenmodulen gespeicherten Adresse und wird auf dem Display angezeigt.

Eine entsprechende Rettungszeichenleuchte weist zum Beispiel ein Piktogramm zur Fluchtweganzeige, ein Leuchtmittel sowie weitere elektrische und elektronische Einrichtungen zum Betrieb und zur Versorgung des Leuchtmittels auf. Als Einzelbatterieleuchte umfasst dieses Leuchtenmodul außerdem eine wiederaufladbare Batterie.

Ein weiteres Leuchtenmodul des Notbeleuchtungssystems ist eine Sicherheitsleuchte zur Not- und Fluchtwegausleuchtung. Dieses Modul ist typischerweise für einen Deckeneinbau oder einen Deckenaufbau, Wandeinbau oder Wandanbau ausgebildet.

Sicherheits- und Rettungszeichenleuchten müssen bestimmte Produkt- und Beleuchtungsstandards erfüllen, wie zum Beispiel IEC/EN 60598-2-22, EN 1838, ISO 3864, ISO 7010 oder ISO 30061. Weitere Standards für sicherheitsrelevante Installationen sind EN 50172, IEC/EN 60364-5-56 und IEC/EN 60364-718. Auch diese sind beim Aufbau eines Notlichtsystems zu beachten.

Bei zentral versorgten Sicherheitssystemen ist es üblich, dass Rettungszeichenleuchten und Sicherheitsleuchten an einem gemeinsamen Stromkreis betrieben werden. Verschiedene sicherheitsrelevante Abschnitte eines Gebäudes sind mit unterschiedlichen Stromkreisen ausgestattet. Typischerweise wird jeder Brandabschnitt mit mindestens zwei Stromkreisen zur Versorgung sämtlicher Notleuchten in dem jeweiligen Brandabschnitt eines Gebäudes versehen.

DIN VDE 0108 Teil 100 und DIN VDE 0108 Teil 560 schreiben vor, dass maximal 20 Notleuchten (Verbraucher) pro Stromkreis (Endstromkreis) betrieben werden dürfen. Aus diesem Grund müssen zentral versorgte Notlichtsysteme oftmals mit mehreren Stromkreisen zur Versorgung der Notleuchten ausgestattet werden. Bei großen Gebäuden können bis zu 1000 Stromkreise zur Versorgung sämtlicher Notleuchten des betreffenden Gebäudes verwendet werden.

Aus EP 0 939 476 B1 der Firma Inotec aus dem Jahr 1998 ist es bekannt, Rettungszeichenleuchten und Sicherheitsleuchten gemeinsam an demselben Endstromkreis zu betreiben, um die Anzahl der zu verlegenden Leitungen in einem Brandabschnitt zu reduzieren. Die Kommunikation zwischen den Leuchten und einer Zentralanlage erfolgt kabelgebunden über die Stromkreise.

Bei Notlichtsystemen, bei denen jede Notleuchte eine eigene Batterie zur Notstromversorgung im Falle eines Ausfalls des Spannungsversorgungsnetzes aufweist (Einzelbatterieleuchten), ist es bekannt, dass die Notleuchten in ein Funknetzwerk zur kabellosen Kommunikation der Notleuchten untereinander eingebunden sind.

EP 2 782 428 A2 beschreibt ein Notlichtsystem mit einer Zentralbatterie für sämtliche Notleuchten und mit zentraler Steuervorrichtung, wobei die Notleuchten mit der zentralen Steuervorrichtung per Funk kommunizieren.

Um die Anforderungen aus DIN VDE 0108 Teil 560 zu erfüllen muss der Nutzer bei zentral versorgten Notbeleuchtungssystemen die Notleuchten den Stromkreisen zuordnen können. Hierzu muss die Zuordnung von Notleuchten zu Stromkreisen erkannt werden. Das heißt mit anderen Worten, dass erkannt werden muss, welche der Notleuchten eines Notlichtsystems welchem Stromkreis der mehreren, zur Spannungsversorgung der Notleuchten vorgesehenen Stromkreise zugeordnet sind.

EP 1 953 893 A2 beschreibt eine zentralisierte Notfall-Lichtanlage mit in herkömmliche Beleuchtung integrierten Funktionalitäten.

EP 2 573 630 A1 beschreibt eine Notlichtbeleuchtungsanlage mit Datenkommunikationsfähigkeiten.

Der Erfindung liegt die Aufgabe zugrunde, Verfahren zum automatisierten Erkennen der Zuordnung von Notleuchten zu Stromkreisen zur Spannungsversorgung der Notleuchten in einem Notlichtsystem zu schaffen.

Das erfindungsgemäße Verfahren ist definiert durch die Merkmale des unabhängigen Anspruchs 1.

Das erfindungsgemäße Verfahren betrifft Notlichtsysteme, bei denen jede Notleuchte genau einem von mehreren Stromkreisen, die zur Spannungsversorgung der Notleuchten mit einem Spannungsversorgungsnetz verbunden sind, zugeordnet ist und jede Notleuchte über eine separate, von den Stromkreisen verschiedene, vorzugsweise drahtlose Kommunikationsverbindung mit einer zentralen Steuervorrichtung kommuniziert. Die zentrale Steuervorrichtung ist zum selektiven Schalten der Stromkreise und zum Erkennen des Betriebszustandes jeder Notleuchte über die Kommunikationsverbindung ausgebildet. Das bedeutet, dass über die zentrale Steuervorrichtung jeder der Stromkreise selektiv aktiviert und deaktiviert werden kann und dass an der zentralen Steuervorrichtung der Betriebszustand (aktiv oder deaktiv) jeder Notleuchte erfasst werden kann. Die zur Erfassung des Betriebszustandes erforderlichen Informationen werden von der betreffenden Notleuchte über die Kommunikationsverbindung an die zentrale Steuervorrichtung übertragen.

Bei dem erfindungsgemäßen Verfahren werden zunächst mehrere und vorzugsweise sämtliche Stromkreise aktiviert, das heißt über die zentrale Steuervorrichtung eingeschaltet. Sodann erfolgt ein Betreiben der Stromkreise mit einer bestimmten Spannungsform.

Gemäß einem Aspekt der Erfindung werden die an den aktivierten Notleuchten anliegenden Spannungsformen, zum Beispiel Wechselspannung oder Gleichspannung, erfasst. Die zentrale Steuervorrichtung ist dabei zum Erkennen der an jeder Notleuchte anliegenden Spannungsform ausgebildet. Hierzu sendet jede Notleuchte über die Kommunikationsverbindung eine Information an die zentrale Steuervorrichtung, aus der die zentrale Steuervorrichtung die betreffende Spannungsform ermitteln kann. In der zentralen Steuervorrichtung wird dabei zu jeder der Notleuchten die erkannte Spannungsform gespeichert.

Anschließend erfolgt ein Wechseln der Spannungsform eines der zuvor aktivierten Stromkreise.

Sodann erfolgt ein Erfassen der an den aktiven Notleuchten anliegenden Spannungsformen. Insbesondere werden diejenigen Notleuchten ermittelt, bei denen sich nach Wechseln der Spannungsform des Stromkreises die an der Notleuchte anliegende Spannungsform geändert hat.

Die auf diese Weise ermittelten Notleuchten werden in einem Speicher der zentralen Steuervorrichtung hinterlegt und als Stromkreis, dessen Spannungsform geändert wurde, zugehörig gespeichert.

Beispielsweise wird nach Wechseln der Spannungsform des Stromkreises ermittelt, bei welchen Notleuchten sich die anliegende Spannungsform verändert hat. Diese Information wird über die Kommunikationsverbindung an die zentrale Steuervorrichtung übertragen. Diejenigen Notleuchten, bei denen erkannt wurde, dass sich die anliegende Spannungsform verändert hat, werden als dem Stromkreis, dessen Spannungsform geändert wurde, zugehörig gespeichert.

Die Schritte werden so lange wiederholt, bis bei sämtlichen Notleuchten eine Änderung der Spannungsform erkannt wurde.

Vorzugsweise sind die Stromkreise zur Spannungsversorgung der Notleuchten kabelgebunden ausgelegt und mit der zentralen Steuervorrichtung verbunden, damit die zentrale Steuervorrichtung die Stromkreise einzeln und selektiv steuern kann.

Die Kommunikationsverbindung zwischen den Notleuchten und der zentralen Steuervorrichtung ist vorzugsweise kabellos, zum Beispiel als Funkverbindung, ausgebildet. Die Kommunikation zwischen den Notleuchten und der zentralen Steuervorrichtung erfolgt vollkommen unabhängig von der Stromversorgung der Notleuchten über die Stromkreise.

Bei den Notleuchten handelt es sich vorzugsweise zu einem Teil um Sicherheitsleuchten, die in einer Gefahrensituation, wie zum Beispiel einem Brand, eingeschaltet werden, um einen Gefahrenbereich oder einen Fluchtweg auszuleuchten. Bei einem anderen Teil der Notleuchten handelt es sich vorzugsweise um Rettungszeichenleuchten, die typischerweise permanent leuchtend einen Fluchtweg oder einen Rettungsweg, zum Beispiel durch ein Symbol auf einem Leuchtdisplay, anzeigen.

Vorzugsweise handelt es sich bei dem Notlichtsystem um ein Zentralbatteriesystem, bei dem sämtliche Notleuchten mit derselben zentralen Batterie zur Notstromversorgung der Notleuchten bei Ausfall des Spannungsversorgungsnetzes verbunden sind.

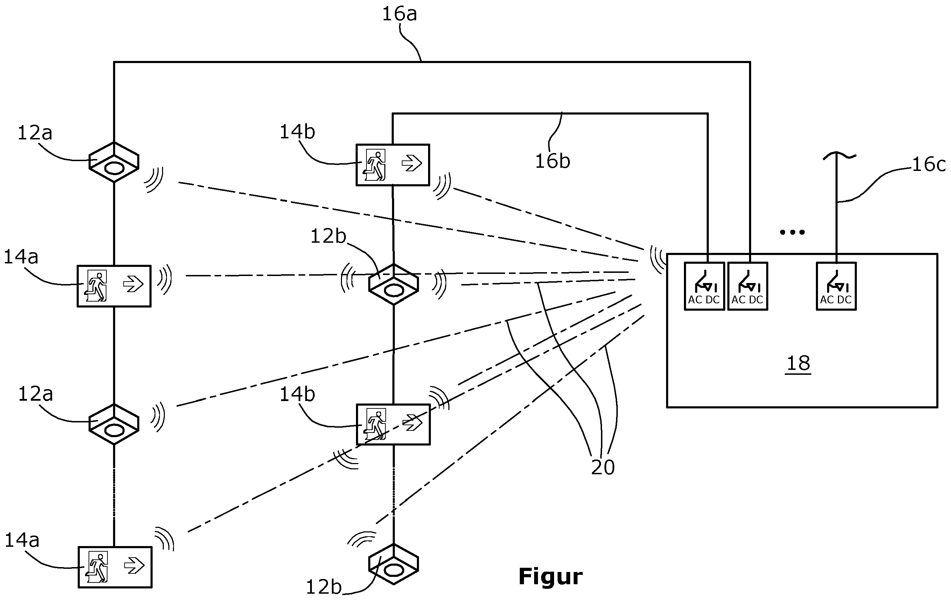

Im Folgenden wird anhand der Figur ein Ausführungsbeispiel der Erfindung näher erläutert. Die Figur zeigt ein Notlichtsystem in schematischer Darstellung.

Das dargestellte Notlichtsystem enthält Sicherheitsleuchten 12a, 12b und Rettungszeichenleuchten 14a, 14b. Die Sicherheitsleuchten 12a und die Rettungszeichenleuchten 14a sind an einem ersten Stromkreis 16a angeschlossen, der die Notleuchten 12a, 14a mit einer zentralen Steuervorrichtung 18 verbindet. Die Notleuchten 12b, 14b sind über einen zweiten Stromkreis 16b mit der zentralen Steuervorrichtung 18 verbunden. Ein weiterer Stromkreis 16c ist lediglich schematisch angedeutet. Je nach Gebäudegröße ist denkbar, dass bis zu circa 1000 Stromkreise eingesetzt werden. Hierbei sind Gebäude in potenzielle Gefahrenbereiche unterteilt, die jeweils mit einem eigenen Stromkreis versorgt werden. Falls in einem ersten Bereich ein Feuer ausbricht, beeinträchtigt das Feuer nicht die Stromkreise anderer Bereiche.

Die zentrale Steuervorrichtung 18 ist dazu ausgebildet, jeden der Stromkreise 16a - 16c einzeln selektiv einzuschalten und auszuschalten und für jeden der Stromkreise 16a - 16c zwischen Wechselspannung (AC) und Gleichspannung (DC) umzuschalten.

Sämtliche Notleuchten 12a, 14a, 12b, 14b... und die zentrale Steuervorrichtung 18 sind dazu ausgebildet, über eine drahtlose Funkverbindung miteinander zu kommunizieren. Die drahtlose Funkverbindung bildet somit eine in der Figur gestrichelt dargestellte Kommunikationsverbindung 20 zwischen den Notleuchten und der zentralen Steuervorrichtung 18. Die Notleuchten benötigen dabei keine direkte Kommunikationsverbindung zu der Steuervorrichtung 18. Beispielsweise ist auch eine Multi-Hop Kommunikation zulässig. In der Figur ist eine direkte Kommunikationsverbindung 20 zwischen jeder der Notleuchten und der zentralen Steuervorrichtung 18 dargestellt. Bei einer Multi-Hop Verbindung könnten jeweils benachbarte Notleuchten über eine Kommunikationsverbindung direkt miteinander kommunizieren, während nur die der Steuervorrichtung 18 nächste Notleuchte oder mehrere zur Steuervorrichtung 18 benachbart angeordnete Notleuchten direkt mit der Steuervorrichtung kommunizieren. Beispielsweise könnten also die Notleuchten 12a mit den Notleuchten 12b und nicht direkt mit der Steuervorrichtung 18 kommunizieren, während die Notleuchten 12b mit der Steuervorrichtung 18 kommunizieren. Die Notleuchten 12b würden dabei direkt mit der Steuervorrichtung 18 kommunizieren, während die Notleuchten 12a über die Notleuchten 12b indirekt mit der Steuervorrichtung 18 kommunizieren. Eine entsprechende Multi-Hop Verbindung wäre auch für die Notleuchten 14a, 14b denkbar.

Die zentrale Steuervorrichtung ist mit einer zentralen Notstrombatterie versehen, an die sämtliche Notleuchten 12a, 14a, 12b, 14b usw. angeschlossen sind, um die Notleuchten im Falle eines Ausfalls des Spannungsversorgungsnetzes mit Spannung zu versorgen.

Die Erfindung hat zum Ziel, automatisch zu erkennen, welche der Notleuchten 12a, 14a, 12b, 14b usw. welchem Stromkreis 16a, 16b, 16c usw. zugeordnet ist.

Gemäß einem Beispiel, welches das Verständnis der Erfindung erleichtert, werden hierzu sämtliche Stromkreise 16a, 16b, 16c über die zentrale Steuervorrichtung 18 eingeschaltet. Über die Kommunikationsverbindung 20 erhält die Steuervorrichtung 18 von jeder aktiven, das heißt eingeschalteten Notleuchte ein Signal, wonach die betreffende Notleuchte aktiv ist. Zudem werden Informationen über den Notleuchtentyp übertragen. Diese Informationen werden in dem Speicher der Steuervorrichtung 18 hinterlegt.

Anschließend wird der Stromkreis 16a von der Steuervorrichtung 18 abgeschaltet.

Sodann prüft die Steuervorrichtung 18 erneut, welche Notleuchten aktiv sind. Hierbei empfängt sie nur noch von den Notleuchten 12b, 14b ein Signal, während die Notleuchten 12a, 14a ausgeschaltet sind und keine Information an die Steuervorrichtung 18 übertragen. Die von den Notleuchten 12b, 14b empfangenen Signale werden ebenfalls gespeichert und mit den zuvor gespeicherten Informationen verglichen. Aus dem Vergleich erkennt die Steuervorrichtung 18, dass von ursprünglich acht Notleuchten nunmehr nur noch vier Notleuchten aktiv sind. Daraus erkennt die Steuervorrichtung 18, dass vier Notleuchten dem Stromkreis 16a, der deaktiviert worden ist, angehören. Da jede der Notleuchten auch Informationen über Art und Typ der Notleuchte sowie ein Identifikationssignal zur eindeutigen Identifikation jeder Notleuchte übermittelt, erkennt die Steuervorrichtung 18 anhand des Vergleichs der Daten in dem Speicher vor und nach Abschalten des Stromkreises 16a ebenfalls, welche der Notleuchten nun nicht mehr aktiv sind und somit dem Stromkreis 16a angehören.

Diese Verfahrensschritte werden so lange wiederholt, bis keine Notleuchten mehr als aktiv erkannt werden. Dann ist für jede der Notleuchten ermittelt worden, welchem Stromkreis sie angehört.

Gemäß der Erfindung werden die Stromkreise nicht einzeln abgeschaltet. Stattdessen wird die Spannungsform eines einzelnen Stromkreises selektiv verändert. Initial werden nach Aktivieren sämtlicher Stromkreise 16a, 16b, 16c diese Stromkreise mit Wechselspannung (AC) versorgt.

Zu jeder als aktiv erkannten Notleuchte wird von der Notleuchte an die zentrale Steuervorrichtung 18 eine Information übermittelt, mit welcher Spannungsform die betreffende Notleuchte versorgt wird. Diese Informationen werden in dem zentralen Speicher der Steuervorrichtung gespeichert.

Während bei dem oben genannten Beispiel nun ein einzelner Stromkreis abgeschaltet wird, wird bei der Erfindung die Spannungsform eines Stromkreises, zum Beispiel von Stromkreis 16a, von Wechselspannung zu Gleichspannung (DC) verändert.

Anschließend empfängt die Steuervorrichtung 18 von sämtlichen aktiven Notleuchten 12a, 14a, 12b, 14b die Information über die an der betreffenden Notleuchte anliegende Spannungsform. Diese Informationen werden ebenfalls in dem Speicher hinterlegt und mit den vor Wechseln der Spannungsform von Stromkreis 16a eingeholten Informationen verglichen.

Durch den Vergleich ermittelt die Steuervorrichtung 18, dass von ursprünglich acht Notleuchten 12a, 14a, 12b, 14b, die mit Wechselspannung betrieben wurden, nun nur noch vier Notleuchten 12b, 14b mit Wechselspannung - nämlich die Notleuchten von Stromkreis 16b - betrieben werden und vier Notleuchten 12a, 14a - nämlich die Notleuchten des Stromkreises 16a, dessen Spannungsform von Wechselspannung zu Gleichspannung verändert wurde - mit Gleichspannung betrieben werden. Dadurch, dass sämtliche Notleuchten auch eine Information zur eindeutigen Identifikation der Notleuchten an die Steuervorrichtung 18 übermitteln, kann die Steuervorrichtung 18 auch erkennen, welche der Notleuchten nun mit Gleichspannung und welche mit Wechselspannung betrieben werden. Die Steuervorrichtung leitet aus diesen Informationen nicht nur ab, dass vier Notleuchten am Stromkreis 16a betrieben werden. Vielmehr erkennt die Steuervorrichtung 18 auch, welche Notleuchten 12a, 14a am Stromkreis 16a anliegen und nun mit Gleichspannung versorgt werden.

Das erfindungsgemäße Verfahren ermöglicht auf einfache Weise ein automatisches Erkennen der Zuordnung von Notleuchten zu Stromkreisen eines Notlichtsystems.

## Patentansprüche

1. Verfahren zum automatisierten Erkennen der Zuordnung von Notleuchten (12a, 12b, 14a, 14b) zu Stromkreisen (16a, 16b, 16c), die zur Spannungsversorgung der Notleuchten (12a, 12b, 14a, 14b) mit einem Spannungsversorgungsnetz verbunden sind, wobei jede Notleuchte (12a, 12b, 14a, 14b) genau einem von mehreren Stromkreisen (16a, 16b, 16c) zugeordnet ist und jede Notleuchte (12a, 12b, 14a, 14b) über eine Kommunikationsverbindung (20) mit einer zentralen Steuervorrichtung (18), die zum selektiven Schalten der Stromkreise (16a, 16b, 16c) und zum Erkennen der an jeder Notleuchte (12a, 12b, 14a, 14b) anliegenden Spannungsform über die Kommunikationsverbindung (20) ausgebildet ist, kommuniziert, **gekennzeichnet durch** die folgenden Schritte:
a) Aktivieren mehrerer Stromkreise (16a, 16b, 16c) und Betreiben der Stromkreise (16a, 16b, 16c) mit einer bestimmten Spannungsform
b) Erfassen der an jeder aktiven Notleuchte (12a, 12b, 14a, 14b) anliegenden Spannungsform
c) Wechseln der Spannungsform eines der in Schritt a) aktivierten Stromkreise (16a, 16b, 16c)
d) Erfassen der an den aktiven Notleuchten (12a, 12b, 14a, 14b) anliegenden Spannungsformen
e) Speichern der Notleuchten (12a, 12b, 14a, 14b), deren in Schritt d) erfasste Spannungsform von der in Schritt b) erfassten Spannungsform abweicht, als zu dem Stromkreis (16a, 16b, 16c), dessen Spannungsform in Schritt c) gewechselt wurde, zugeordnet
f) Wiederholen der Schritte c) - e) so lange, bis sämtliche in Schritt b) als aktiv erfassten Notleuchten (12a, 12b, 14a, 14b) mit einer anderen Spannungsform erfasst wurden.

2. Verfahren nach Anspruch 1, **dadurch gekennzeichnet, dass** die Stromkreise (16a, 16b, 16c) kabelgebunden ausgebildet und mit der zentralen Steuervorrichtung (18) verbunden sind.

3. Verfahren nach einem der vorhergehenden Ansprüche, **dadurch gekennzeichnet, dass** die Kommunikationsverbindung (20) zwischen den Notleuchten (12a, 12b, 14a, 14b) und der Steuervorrichtung (18) kabellos ausgebildet ist.

4. Verfahren nach einem der vorhergehenden Ansprüche, **dadurch gekennzeichnet, dass** die Notleuchten (12a, 12b, 14a, 14b) Sicherheitsleuchten, die einen Bereich oder einen Fluchtweg in einer Notsituation, wie zum Beispiel einem Brand, ausleuchten, oder Rettungszeichenleuchten, die einen Rettungs- oder Fluchtweg anzeigen, sind.

5. Verfahren nach einem der vorhergehenden Ansprüche, **dadurch gekennzeichnet, dass** sämtliche Notleuchten (12a, 12b, 14a, 14b) mit derselben zentralen Batterie zur Notstromversorgung bei Ausfall des Spannungsversorgungsnetzes verbunden sind.

6. Verfahren nach einem der vorhergehenden Ansprüche, **dadurch gekennzeichnet, dass** in Schritt a) sämtliche Stromkreise (16a, 16b, 16c) aktiviert werden.

## Claims

1. A method for automated detection of the allocation of emergency lights (12a, 12b, 14a, 14b) to electric circuits (16a, 16b, 16c) connected with a voltage supply network for the voltage supply of said emergency lights (12a, 12b, 14a, 14b), wherein each emergency light (12a, 12b, 14a, 14b) is exactly allocated to one of a plurality of electric circuits (16a, 16b, 16c) and each emergency light (12a, 12b, 14a, 14b) communicates via a communication link (20) with a central control device (18) which is configured for selectively switching said electric circuits (16a, 16b, 16c) and for detecting the waveform of the voltage applied to each emergency light (12a, 12b, 14a, 14b) via said communication link (20),
**characterized by** the following steps:
a) activating a plurality of electric circuits (16a, 16b, 16c) and operating said electric circuits (16a, 16b, 16c) with a specific voltage waveform,
b) sensing the waveform of the voltage applied to each active emergency light (12a, 12b, 14a, 14b),
c) changing the voltage waveform of an electric circuit (16a, 16b, 16c) activated in step a),
d) sensing the waveforms of the voltage applied to said active emergency lights (12a, 12b, 14a, 14b),
e) storing said emergency lights (12a, 12b, 14a, 14b), whose voltage waveform sensed in step d) deviates from the voltage waveform sensed in step b), as allocated to said electric circuit (16a, 16b, 16c) whose voltage waveform was changed in step c),
f) repeating the steps c) - e) until all emergency lights (12a, 12b, 14a, 14b) sensed as active in step b) have been sensed as having a different voltage waveform.

2. The method according to claim 1, **characterized in that** the electric circuits (16a, 16b, 16c) are of a wired configuration and connected with the central control device (18).

3. The method according to any one of the preceding claims, **characterized in that** the communication link (20) between the emergency lights (12a, 12b, 14a, 14b) and the control device (18) is configured in a wireless manner.

4. The method according to any one of the preceding claims, **characterized in that** the emergency lights (12a, 12b, 14a, 14b) are security lights illuminating an area or an escape route in an emergency situation, such as a fire, for example, or emergency sign lights indicating an emergency route or escape route.

5. The method according to any one of the preceding claims, **characterized in that** all emergency lights (12a, 12b, 14a, 14b) are connected with the same central battery for emergency power supply in the case of failure of the voltage supply network.

6. The method according to any one of the preceding claims, **characterized in that** in step a) all electric circuits (16a, 16b, 16c) are activated.

## Revendications

1. Procédé destiné à la détection automatique de l'affectation de luminaires de secours (12a, 12b, 14a, 14b) à des circuits électriques (16a, 16b, 16c) qui sont raccordés à l'alimentation en tension des luminaires de secours (12a, 12b, 14a, 14b), chaque luminaire de secours (12a, 12b, 14a, 14b) étant affecté précisément à l'un de plusieurs circuits électriques (16a, 16b, 16c), et chaque luminaire de secours (12a, 12b, 14a, 14b) communiquant par le biais d'un raccordement de communication (20) avec un dispositif de commande (18) central qui est constitué pour la commutation sélective des circuits électriques (16a, 16b, 16c) et pour la détection de la forme de tension présente sur chaque luminaire de secours (12a, 12b, 14a, 14b) par le biais du raccordement de communication (20), **caractérisé par** les étapes suivantes :
a) activation de plusieurs circuits électriques (16a, 16b, 16c) et fonctionnement des circuits électriques (16a, 16b, 16c) avec une forme de tension définie
b) détection de la forme de tension présente sur chaque luminaire de secours (12a, 12b, 14a, 14b) actif
c) changement de la forme de tension de l'un des circuits électriques (16a, 16b, 16c) activés dans l'étape a)
d) détection des formes de tension présentes sur les luminaires de secours (12a, 12b, 14a, 14b) actifs
e) enregistrement des luminaires de secours (12a, 12b, 14a, 14b) dont la forme de tension détectée dans l'étape d) diffère de la forme de tension détectée dans l'étape b) comme étant affectés au circuit électrique (16a, 16b, 16c) dont la forme de tension a été changée dans l'étape c)
f) répétition des étapes c) - e) jusqu'à ce que tous les luminaires de secours (12a, 12b, 14a, 14b) détectés comme actifs dans l'étape b) aient été détectés avec une autre forme de tension.

2. Procédé selon la revendication 1, **caractérisé en ce que** les circuits électriques (16a, 16b, 16c) sont constitués de façon filaire et sont raccordés au dispositif de commande (18) central.

3. Procédé selon l'une des revendications précédentes, **caractérisé en ce que** le raccordement de communication (20) est constitué sans fil entre les luminaires de secours (12a, 12b, 14a, 14b) et le dispositif de commande (18) .

4. Procédé selon l'une des revendications précédentes, **caractérisé en ce que** les luminaires de secours (12a, 12b, 14a, 14b) sont des luminaires de sécurité qui éclairent une zone ou une voie d'évacuation dans une situation d'urgence, comme par exemple un incendie, ou des luminaires à pictogrammes de secours qui indiquent une voie de fuite ou d'évacuation.

5. Procédé selon l'une des revendications précédentes, **caractérisé en ce que** tous les luminaires de secours (12a, 12b, 14a, 14b) sont raccordés à la même batterie centrale destinée à l'alimentation en courant de secours en cas de défaillance du réseau d'alimentation en tension.

6. Procédé selon l'une des revendications précédentes, **caractérisé en ce que** tous les circuits électriques (16a, 16b, 16c) sont activés dans l'étape a).
